# EUROPEAN PATENT APPLICATION

(11) **EP 2 256 592 A1**
(43) Date of publication of application: **01.12.2010**
(21) Application number: 10162992.1
(22) Date of filing: 17.05.2010
(51) Int. Cl.: G06F 3/033, G06F 3/043, G06F 3/048, G06F 1/16, G04G 21/00

(54) **Touchless control of an electronic device**

(30) Priority: 18.05.2009 KR 20090043198; 04.06.2009 KR 20090049612
(71) Applicant: LG ELECTRONICS INC., Yeongdeungpo-gu Seoul 150-721 (KR)
(72) Inventor: Kim, Bong Soo, 150-721 Seoul (KR); Koo, Ja Hyoung, 150-721 Seoul (KR)
(74) Representative: Cabinet Plasseraud

(57) **Abstract**

A method of controlling an electronic device includes detecting an object at a distance from the electronic device, displaying a symbol at a fixed location on a screen of the electronic device in response to detection of the object, and performing an operation corresponding to the symbol based on a state of the object detected after display of the symbol on the screen.

## Description

### CROSS-REFERENCE TO RELATED APPLICATION

This application claims the priority benefit of Korean Patent Application Nos. 10-2009-0043198, filed on May 18, 2009, and 10-2009-0049612, filed on June 4, 2009.

### BACKGROUND

### 1. Field

One or more embodiments described herein relate to touchless control of an electronic device.

### 2. Background

Mobile phones, digital photo frames, and other electronic devices are being developed with more and more functions to meet consumer demands. These functions are usually controlled by one or more input devices in the form of buttons or touch screens. Buttons are disadvantageous for learning intuitive control and are also aesthetically unpleasing in many cases. Touch screens are hard to use for small screens and are subject to damage from outside influences.

### BRIEF DESCRIPTION OF THE DRAWINGS

FIG. 1 is a diagram showing an internal configuration for one embodiment of an electronic device.

FIG. 2 is a diagram showing one view of an electronic device which may have an internal configuration as shown in FIG. 1.

FIG. 3 is a diagram showing another view of the device in FIG. 2.

FIG. 4 is a diagram showing operations included in a first embodiment of a method for controlling an electronic device.

FIG. 5 is a diagram showing operations included in a second embodiment of a method for controlling an electronic device.

FIG. 6 is a diagram showing operations included in a third embodiment of a method for controlling an electronic device.

FIGS. 7 through 11 are diagrams that explain operation of the aforementioned embodiments, taking a wrist watch-type mobile phone as an example.

FIGS. 12 through 17 are diagrams that explain operation of the aforementioned embodiments taking a digital photo frame as an example.

### DETAILED DESCRIPTION

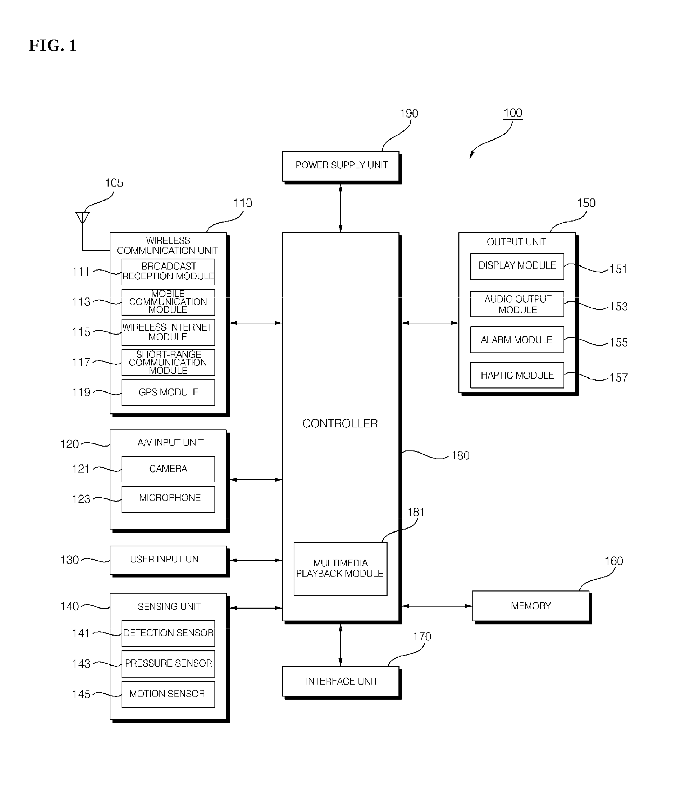

FIG. 1 shows an internal configuration of one embodiment of an electronic device 100, which includes a wireless communication unit 110, an audio/video (A/V) input unit 120, a user input unit 130, a sensing unit 140, an output unit 150, a memory 160, an interface unit 170, a controller 180, and a power supply unit 190. Two or more of these units may be incorporated into a single unit or one or more of these units may be included in two or more smaller units.

The wireless communication unit 110 may include a broadcast reception module 111, a mobile communication module 113, a wireless internet module 115, short-range communication module 117, and a global positioning system (GPS) module 119.

The broadcast reception module 111 may receive at least one of a broadcast signal and broadcast-related information from an external broadcast management server through a broadcast channel. The broadcast channel may be a satellite channel or a terrestrial channel, and the broadcast management server may be a server which generates broadcast signals and/or broadcast-related information and transmits the generated broadcast signals and/or the generated broadcast-related information. Additionally, or alternatively, this server may receive and then transmit previously-generated broadcast signals and/or previously-generated broadcast-related information.

The broadcast-related information may include various types of information, including but not limited to broadcast channel information, broadcast program information and/or broadcast service provider information. The broadcast signal may be a TV broadcast signal, a radio broadcast signal, a data broadcast signal, the combination of a data broadcast signal and a TV broadcast signal or a combination of a data broadcast signal and a radio broadcast signal.

The broadcast-related information may be provided to the electronic device 100 through a mobile communication network. In this case, the broadcast-related information may be received by the mobile communication module 113, rather than by the broadcast reception module 111. The broadcast-related information may come in various forms, e.g., Digital Multimedia Broadcasting (DMB) electronic program guide (EPG) or Digital Video Broadcast-Handheld (DVB-H) electronic service guide (ESG).

The broadcast reception module 111 may receive broadcast signals using various broadcast systems such as DMB-Terrestrial (DMB-T), DMB-Satellite (DMB-S), Media Forward Link Only (MediaFLO), DVB-H, Integrated Services Digital Broadcast-Terrestrial (ISDB-T) systems.

The broadcast reception module 111 may receive the broadcast signal using various broadcasting systems. In addition, the broadcast reception module 111 may be configured to be suitable for nearly all types of broadcasting systems other than those set forth herein. The broadcast signal and/or the broadcast-related information received by the broadcast reception module 111 may be stored in the memory 160.

The mobile communication module 113 may transmit wireless signals to or receive wireless signals from at least one of a base station, an external terminal, and a server through a mobile communication network. The wireless signals may include various types of data according to, for example, whether the electronic device 100 transmits/receives voice call signals, video call signals, or text/multimedia messages.

The wireless internet module 115 may be a module for wirelessly accessing the internet, and may be embedded in the electronic device 100 or may be installed in an external device. The wireless internet module 115 may use various wireless internet technologies such as wireless local area network (WLAN), Wireless Broadband (WiBro), World Interoperability for Microwave Access (Wimax), and High Speed Downlink Packet Access (HSDPA).

The short-range communication module 117 may be a module for short-range communication. The short-range communication module 117 may use various short-range communication techniques such as Bluetooth, radio frequency identification (RFID), infrared data association (IrDA), ultra wideband (UWB), and ZigBee.

The GPS module 119 may receive position information from a plurality of GPS satellites.

The A/V input unit 120 may be used to receive audio signals or video signals. The A/V input unit 120 may include a camera module 121 and a microphone 123. The camera module 121 may process various image frames such as still images or moving images captured by an image sensor during a video call mode or an image capturing mode. The image frames processed by the camera module 121 may be displayed by a display module 151.

The image frames processed by the camera module 121 may be stored in the memory 160 and/or may be transmitted to an external device through the wireless communication unit 110. The electronic device 100 may include multiple cameras 121.

The microphone 123 may receive external sound signals during a call mode, a recording mode, or a voice recognition mode with the use of a microphone and may convert the sound signals into electrical sound data. In the call mode, the mobile communication module 113 may convert the electrical sound data into data that can be readily transmitted to a mobile communication base station and then output the data obtained by the conversion. The microphone 123 may use various noise removal algorithms to remove noise that may be generated during the reception of external sound signals.

The user input unit 130 may generate key input data based on a user input for controlling the operation of the electronic device 100. The user input unit 130 may be implemented as a keypad, a dome switch, a static pressure or capacitive touch pad, a jog wheel, a jog switch, joystick, or a finger mouse. In particular, if the user input unit 130 is implemented as a touch pad and forms a layered structure together with the display module 151, the user input unit 130 and the display module 151 may be collectively referred to as a touch screen.

The sensing unit 140 determines a current state of the electronic device 100 such as whether the electronic device 100 is opened up or closed, the position of the electronic device 100 and whether the electronic device 100 is placed in contact with a user, and generates a sensing signal for controlling the electronic device 100.

For example, when the electronic device 100 is a slider-type mobile phone, the sensing unit 140 may determine whether the electronic device 100 is opened up or closed. In addition, the sensing unit 140 may determine whether the electronic device 100 is powered by the power supply unit 190 and whether the interface unit 170 is connected to an external device.

The sensing unit 140 may include a detection sensor 141, a pressure sensor 143 and a motion sensor 145. The detection sensor 141 may determine whether there is an entity nearby and approaching the electronic device 100 without any mechanical contact with the entity. According to one embodiment, the detection sensor 141 may detect the approaching entity using reflected ultrasonic waves or detecting a change in an alternating magnetic field or the rate of change of static capacitance. The sensing unit 140 may include two or more detection sensors 141.

The pressure sensor 143 may determine whether pressure is being applied to the electronic device 100 or may measure the level of pressure, if any, applied to the electronic device 100. The pressure sensor 143 may be installed in a certain part of the electronic device 100 where the detection of pressure is necessary.

For example, the pressure sensor 143 may be installed in the display module 151. In this case, it is possible to differentiate a typical touch input from a pressure touch input, which is generated using a higher pressure level than that used to generate a typical touch input, based on data provided by the pressure sensor 143. In addition, when a pressure touch input is received through the display module 151, it is possible to determine the level of pressure applied to the display module 151 upon the detection of a pressure touch input based on data provided by the pressure sensor 143.

The motion sensor 145 may determine the location and motion of the electronic device 100 using an acceleration sensor or a gyro sensor.

In the meantime, acceleration sensors are a type of device for converting a vibration in acceleration into an electric signal. With recent developments in micro-electromechanical system (MEMS) technology, acceleration sensors have been widely used in various products for various purposes ranging from detecting large motions such as car collisions as performed in airbag systems for automobiles to detecting minute motions such as the motion of the hand as performed in gaming input devices. In general, one or more acceleration sensors representing two or three axial directions may be incorporated into a single package.

There are some cases when the detection of only one axial direction, for example, a Z-axis direction, is necessary. Thus, when an X- or Y-axis acceleration sensor, instead of a Z-axis acceleration sensor, is required, the X- or Y-axis acceleration sensor may be mounted on another substrate and the other substrate may be mounted on a main substrate. Gyro sensors are sensors to measure angular velocity, and may determine the relative direction of rotation of electronic device 100 to a reference direction.

The output unit 150 may output audio signals, video signals and/or alarm signals, and may include the display module 151, an audio output module 153, an alarm module 155, and/or a haptic module 157.

The display module 151 may display various types of information processed by the electronic device 100. For example, if the electronic device 100 is in a call mode, the display module 151 may display a user interface (UI) or a graphic user interface (GUI) for making or receiving a call. If the electronic device 100 is in a video call mode or an image capturing mode, the display module 151 may display a UI or a GUI for capturing or receiving images.

If the display module 151 and the user input unit 130 form a layered structure and thus are implemented as a touch screen, the display module 151 may be used not only as an output device but also as an input device.

If the display module 151 is implemented as a touch screen, the display module 151 may also include a touch screen panel and a touch screen panel controller. The touch screen panel is a transparent panel attached onto the exterior of the electronic device 100 and may be connected to an internal bus of the electronic device 100.

In operation, the touch screen panel monitors whether the touch screen panel is touched by the user. Once a touch input to the touch screen panel is received, the touch screen panel transmits a number of signals corresponding to the touch input to the touch screen panel controller. The touch screen panel controller processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

The display module 151 may include electronic paper (e-paper). E-paper is a type of reflective display technology and can provide as high resolution as ordinary ink on paper, wide viewing angles, and excellent visual properties. E-paper can be implemented on various types of substrates such as a plastic, metallic or paper substrate and can display and maintain an image thereon even after power is cut off. In addition, e-paper can reduce the power consumption of the electronic device 100 because it does not require a backlight assembly. The display module 151 may be implemented as e-paper by using electrostatic-charged hemispherical twist balls, using electrophoretic deposition, or using microcapsules.

The display module 151 may include at least one of a liquid crystal display (LCD), a thin film transistor (TFT)-LCD, an organic light-emitting diode (OLED), a flexible display, and a three-dimensional (3D) display. The electronic device 100 may include two or more display modules 151. For example, the electronic device 100 may include an external display module (not shown) and an internal display module (not shown).

The audio output module 153 may output audio data received by the wireless communication unit 110 during a call reception mode, a call mode, a recording mode, a voice recognition mode, or a broadcast reception mode or may output audio data present in the memory 160. In addition, the audio output module 153 may output various sound signals associated with the functions of the electronic device 100 such as receiving a call or a message. The audio output module 153 may include a speaker and a buzzer.

The alarm module 155 may output an alarm signal indicating the occurrence of an event in the electronic device 100. Examples of the event include receiving a call signal, receiving a message, and receiving a key signal. Examples of the alarm signal output by the alarm module 155 include an audio signal, a video signal and a vibration signal.

More specifically, the alarm module 155 may output an alarm signal upon receiving a call signal or a message. In addition, the alarm module 155 may receive a key signal and may output an alarm signal as feedback to the key signal. Therefore, the user may be able to easily recognize the occurrence of an event based on an alarm signal output by the alarm module 155. An alarm signal for notifying the user of the occurrence of an event may be output not only by the alarm module 155 but also by the display module 151 or the audio output module 153.

The haptic module 157 may provide various haptic effects (such as vibration) that can be perceived by the user. If the haptic module 157 generates vibration as a haptic effect, the intensity and the pattern of vibration generated by the haptic module 157 may be altered in various ways. For example, the haptic module 157 may synthesize different vibration effects and may output the result of the synthesization. Alternatively, the haptic module 157 may sequentially output different vibration effects.

The haptic module 157 may provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat.

The haptic module 157 may be configured to enable the user to recognize a haptic effect using the kinesthetic sense of the fingers or the arms. The electronic device 100 may include two or more haptic modules 157.

The memory 160 may store various programs necessary for the operation of the controller 180. In addition, the memory 160 may temporarily store various data such as a phonebook, messages, still images, or moving images.

The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), or a read-only memory (ROM). The electronic device 100 may operate a web storage which, for example, may perform the functions of the memory 160 on the internet.

The interface unit 170 may interface with an external device that can be connected to the electronic device 100. The interface unit 170 may be a wired/wireless headset, an external battery charger, a wired/wireless data port, a card socket for, for example, a memory card, a subscriber identification module (SIM) card or a user identity module (UIM) card, an audio input/output (I/O) terminal, a video I/O terminal, or an earphone.

The interface unit 170 may receive data from an external device or may be powered by an external device. The interface unit 170 may transmit data provided by an external device to other components in the electronic device 100 or may transmit data provided by other components in the electronic device 100 to an external device.

When the electronic device 100 is connected to an external cradle, the interface unit 170 may provide a path for supplying power from the external cradle to the electronic device 100 or for transmitting various signals from the external cradle to the electronic device 100.

The controller 180 may control the general operation of the electronic device 100. For example, the controller 180 may perform various control operations regarding making/receiving a voice call, transmitting/receiving data, or making/receiving a video call.

The controller 180 may include a multimedia playback module 181, which plays multimedia data. The multimedia playback module 181 may be implemented as a hardware device and may be installed in the controller 180. Alternatively, the multimedia playback module 181 may be implemented as a software program.

The power supply unit 190 may be supplied with power by an external power source or an internal power source and may supply power to the other components in the electronic device 100.

The electronic device 100 may include a wired/wireless communication system or a satellite communication system and may thus be able to operate in a communication system capable of transmitting data in units of frames or packets.

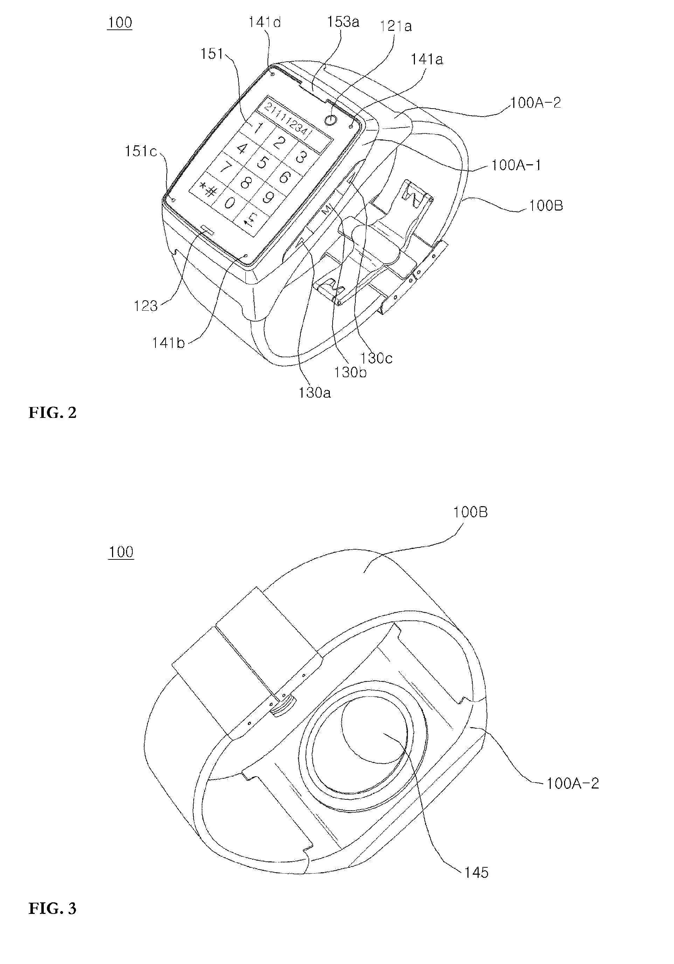

FIGS. 2 and 3 show examples of an external appearance of electronic device 100. In this example, the external device is a wrist watch-type mobile phone which can be worn on the wrist of the user. In other embodiments, the electronic device may be a digital photo frame or any one of a number of other electronic devices.

FIG. 2 shows that electronic device 100 may include a case formed by a front case 100A-1 and a rear case 100A-2, and a band 100B which extends from the case to allow a user to wear the electronic device 100 on his or her wrist.

Various electronic parts may be installed in the space between the front case 100A-1 and the rear case 100A-2, and one or more middle cases (not shown) may be provided between the front case 100A-1 and the rear case 100A-2. The front case 100A-1, the rear case 100A-2 and the middle cases may be formed, for example, of synthetic resin through molding or may be formed of wood or a metallic material such as stainless steel (STS) or titanium (Ti).

The display module 151, a first audio output module 153a, a first camera 121 a, the microphone 123 and first through fourth detection sensors 141 a through 141 d may be provided in the front case 100A-1. The display module 151 may include an LCD or an OLED.

Since a touch pad is configured to overlap the display module 151 and thus to form a layer structure, the display module 151 may serve as a touch screen. Thus, it is possible for the user to enter various information to the electronic device 100 simply by touching the display module 151.

The first audio output module 153a may be implemented as a receiver or a speaker. The first camera 121 a may be configured to be able to capture a still or moving image of, for example, the user. The microphone 123 may be configured to be able to receive the voice of the user or other sounds.

First through third user input modules 130a through 130c may be provided on one side of the rear case 100A-2, and the interface unit 170 may be provided in the front case 100A-1 or the rear case 100A-2.

The first through third user input modules 130a through 130c may be collectively referred to as the user input unit 130. The user input unit 130 may adopt various manipulation methods as long as it can offer tactile feedback to the user. For example, the user input unit 130 may be implemented as a dome switch or touch pad capable of being pushed or touched by the user so as to receive a command or information or as a jog wheel, jog switch or joystick capable of being rotated by the user.

The user input unit 130 may allow the user to enter various commands such as 'start', 'end', and 'scroll,' and various numerals, characters or symbols to the electronic device 100. The user input unit 130 may also provide a number of hot keys for activating certain functions of the electronic device 100.

FIG. 3 shows a rear view of electronic device 100, where an acceleration sensor (not shown) may be provided at the rear of the rear case 100A-2. The acceleration sensor may be able to sense vibration or shock applied to the electronic device 100. A second camera (not shown) may be additionally provided on one side of the rear case 100A-2.

The second camera may have a different photographing direction from that of the first camera 121 a shown in FIG. 2. In addition, the first and second cameras 121 a and 121 b may have different resolutions. For example, the first camera 121 a may be used to capture and then transmit an image of the face of the user during a video call. Thus, a low-resolution camera may be used as the first camera 121 a. The second camera 121 b may be used to capture an image of an ordinary subject. In this case, the image captured by the second camera 121 b may not need to be transmitted. Thus, a high-resolution camera may be used as the second camera 121 b.

A cameral flash (not shown) and a mirror (not shown) may be disposed near the second camera. The cameral flash may be used to illuminate a subject when the user attempts to capture an image of the subject with the second camera. The mirror may be used for the user to prepare him- or herself for taking a self shot.

A second audio output module (not shown) may be additionally provided in the rear case 100A-2. The second audio output module may realize a stereo function along with the first audio output module 153a. The second audio output module may also be used in a speaker-phone mode.

An antenna (not shown) for receiving a broadcast signal may be disposed on one side of the rear case 100A-2. The antenna may be installed so as to be able to be pulled out of the rear case 100A-2.

The second camera and the other elements that have been described as being disposed in the rear case 100A-2 may be disposed in the front case 100A-1. In addition, the first camera 121 a may be configured to be rotatable and thus to cover the photographing direction of the second camera. In this case, the second camera 121 b may be optional.

The power supply unit 190 may be disposed in the rear case 100A-2, may include a rechargeable battery, and may be coupled to the rear case 100A-2 so as to be attachable to or detachable from the rear case 100A-2.

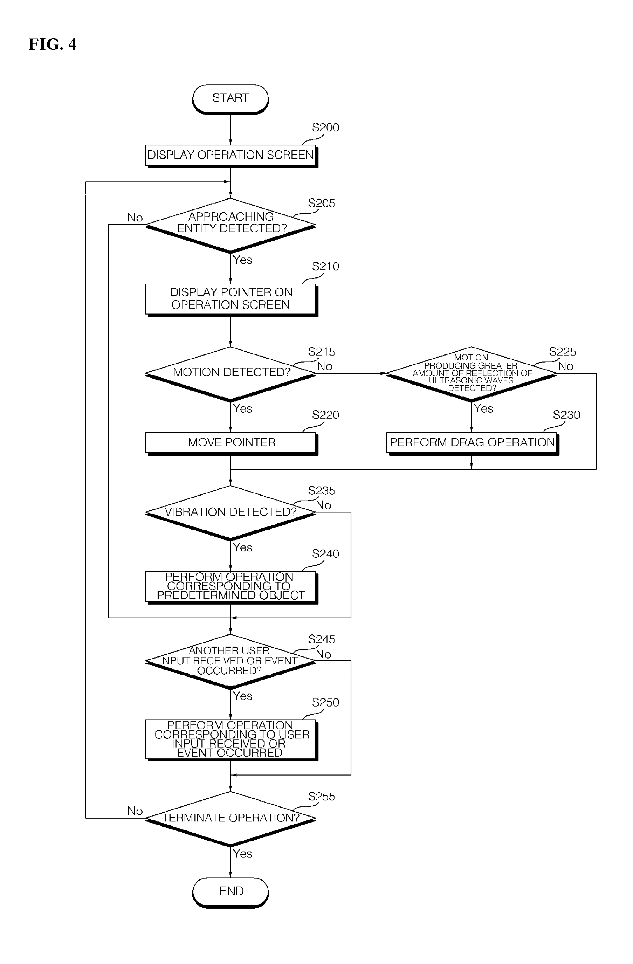

FIG. 4 shows operations included in one embodiment of a method for controlling an electronic device, which, for example, may be the watch-type device shown in FIGS. 2 and 3, a digital frame, or another type of electronic device. For illustrative purposes, the operations of this method are explained relative to the functional block diagram shown in FIG. 1, although a device having an internal configuration different from that shown in FIG. 1 may be used.

Referring to FIG. 4, the controller 180 of the electronic device may display an operation screen corresponding to a menu or operation selected by the user on the display module 151 (S250). The operation screen may be an idle screen, an incoming message screen, an outgoing message screen, a main menu screen, an image viewer screen, a broadcast screen, a map screen or a webpage screen.

Thereafter, if an entity (e.g., user's finger) nearby and approaching the electronic device 100 is detected (S205), the controller 180 may display a symbol on the operation screen (S210). For illustrative purposes, it may be assumed that the symbol is a pointer, but another type of symbol may be displayed in other embodiments.

The approaching entity may be detected by the detection sensor 141, which, for example, may be an ultrasonic sensor. Ultrasonic sensors generally use piezoelectric vibrators and may include transmitters, that transmit electronic signals at a predetermined frequency to the piezoelectric vibrators, and receivers that generate a voltage based on received sound vibrations. Ultrasonic sensors can determine the distance to an entity based on the time interval between sending an electronic signal and receiving an echo from the entity or based on variations in the period or amplitude of ultrasonic waves received from the entity.

If a first motion such as a slight movement of a fingertip is detected from the approaching entity by the detection sensor 141, the controller 180 may move the pointer on the operation screen in accordance with the detected first motion (S220). For example, if the electronic device 100 is a wrist watch-type mobile phone, the first motion may be generated by wearing the electronic device 100 on the wrist of one hand and slightly scratching the back of the hand with the tip of a finger of the other hand.

On the other hand, if a second motion, which produces a greater amount of reflection of ultrasonic waves than the first motion, is detected from the approaching entity (S225), the controller 180 may control an object currently being pointed at by the pointer to be dragged in accordance with the detected second motion (S230). The detected second motion may be generated by, for example, rubbing the back of one hand with the flatter surface of a finger of the other hand.

If shock or vibration is detected by the motion sensor 145 (S235), the controller 180 may control a predefined operation corresponding to the pointed-to object to be performed (S240). The pointed-to object may be a hyperlink, a soft key, or a menu icon. More specifically, if vibration is detected for the first time, the pointed-to object may be selected. Thereafter, if another vibration is detected, an operation corresponding to the selected object may be performed. The pointed-to object or a selected object may be displayed in a different color or shape from other objects.

If another user input such as a touch or key input is received or if an event such as the reception of an incoming call occurs (S245), the controller 180 may control an operation corresponding to the received user input or the occurred event to be performed (S250).

Operations S205 through S250 may be repeatedly performed until the user chooses to terminate the selected operation or menu (S255). In this manner, it is possible to effectively control the electronic device in a touchless manner.

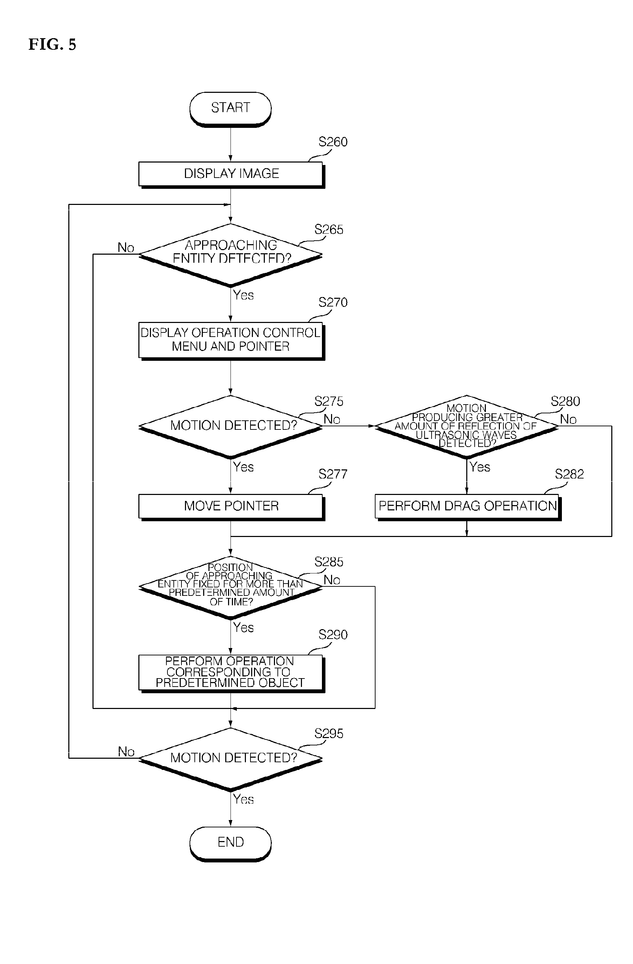

FIG. 5 shows operations included in a second embodiment of a method for controlling an electronic device. In this embodiment, the controller 180 may control a predetermined operation based on an object currently being pointed to by a pointer (S277) or an object dragged in operation S282. The operation may then be performed (S290) when an approaching entity stops moving and its position is fixed for more than a predefined amount of time (S285). This is in contrast to the first embodiment, where the controller 180 controls the predetermined operation to be performed when vibration or shock is detected. The second embodiment may therefore be suitable, for example, for controlling a digital photo frame or other type of device to which it is difficult to apply vibration or shock.

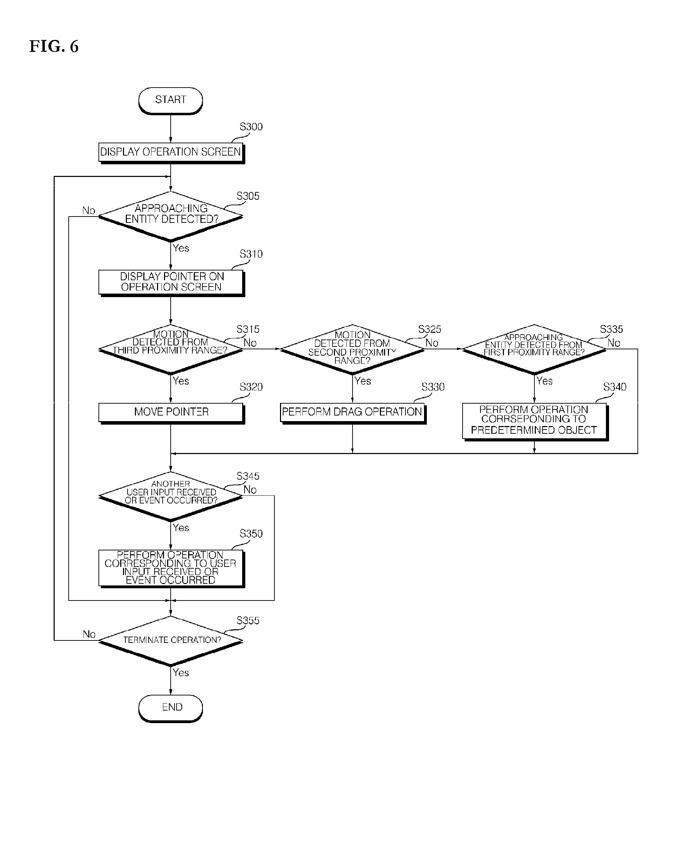

FIG. 6 shows operations included in a third embodiment of a method for controlling an electronic device. This embodiment controls the electronic device 100 in a three-dimensional manner based on the distance between the electronic device 100 and an entity nearby and approaching the electronic device.

Referring to FIG. 6, the controller 180 may display an operation screen corresponding to a menu or operation selected by the user on the display module 151 (S300). Thereafter, if an entity nearby and approaching the electronic device 100 is detected (S305), the controller 180 may display a symbol such as a pointer on the operation screen (S310). For example, if the electronic device 100 is a digital photo frame, the controller 180 may display both an operation control menu and a pointer on the operation screen.

In this embodiment, when the distance between the electronic device 100 and an entity nearby and approaching the electronic device 100 is between D2 and D3, the approaching entity may be determined to be within a third proximity range of the electronic device 100. When the distance between the electronic device 100 and the approaching entity is between D1 and D2, the approaching entity may be determined to be within a second proximity range of the electronic device 100. When the distance between the electronic device 100 and the approaching entity is less than D1, the approaching entity may be determined to be within a first proximity range of the electronic device 100.

If sensing data provided by the detection sensor 141 indicates that a movement of the approaching entity within the third proximity range of the electronic device 100 has been detected (S315), the controller 180 may move the pointer in accordance with the detected movement of the approaching entity (S320).

If the sensing data indicates that a movement of the approaching entity within the second proximity range of the electronic device 100 has been detected (S325), the controller 180 may control an object currently being pointed at by the pointer to be dragged in accordance with the detected movement of the approaching entity (S330).

If the sensing data indicates that a movement of the approaching entity within the first proximity range of the electronic device 100 has been detected (S335), the controller 180 may control an operation corresponding to the pointed-to object to be performed (S340).

If another user input such as a touch or key input is received or if an event such as the reception of an incoming call occurs (S345), the controller 180 may control an operation corresponding to the received user input or the occurred event to be performed (S350). Operations S305 through S350 may be repeatedly performed until the user chooses to terminate the selected operation or menu (S355).

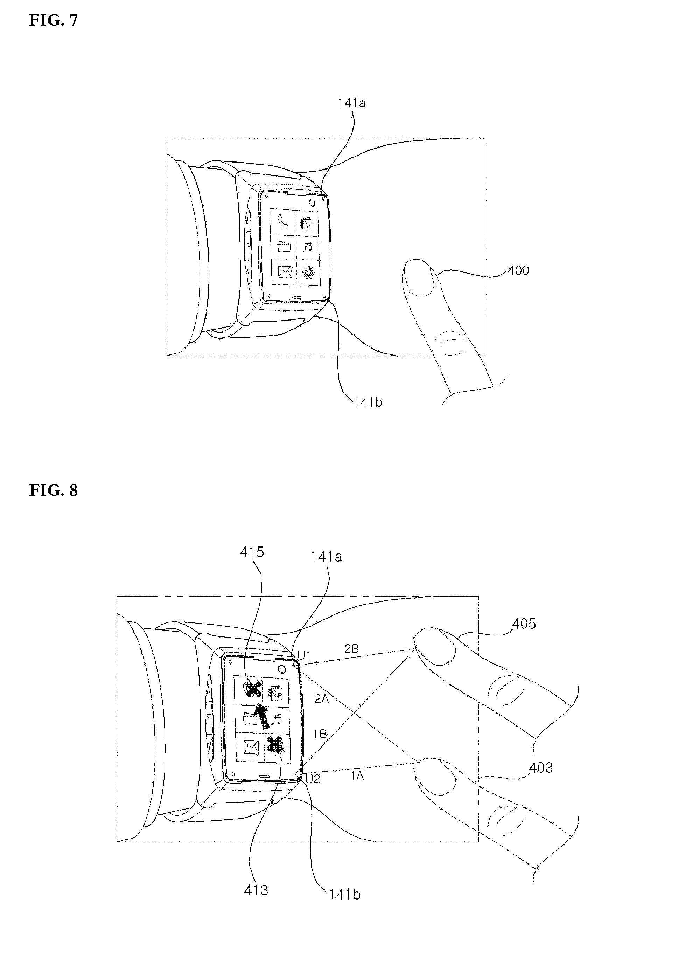

FIGS. 7 through 11 explain operations of the first through third exemplary embodiments, taking a wrist watch-type mobile phone as an example of the electronic device 100. For convenience, assume that the electronic device 100 uses an ultrasonic sensor to detect an approaching entity and any movement of the approaching entity. Of course, in other embodiments a different type of sensor may be used for these purposes.

Referring to FIG. 7, if the user touches the back of the left hand with a finger when wearing the electronic device 100 on the wrist of the left hand, the first and second detection sensors 141 a and 141 b may detect the finger as an approaching entity. When the electronic device 100 is worn on the wrist of the left hand, the back of the left hand may therefore be recognized as a two-dimensional (2D) plane, thereby allowing the electronic device 100 to be controlled in a touchless manner.

Referring to FIG. 8, if the user puts a finger of the right hand on a first location 403 on the back of the left hand when wearing the electronic device 100 on the wrist of the left hand, the first and second detection sensors 141 a and 141b may sense their distance from the finger, e.g., 1 A and 2A respectively. A pointer may then be displayed at a first location 413 on the display module 151 based on results of the sensing.

If the user moves the finger to a second location 405 on the back of the left hand, the first and second detection sensors 141 a and 141 b may re-sense their distance from the finger, e.g., 1 B and 2B respectively. The pointer may then be moved to a second location 415 on the display module 151 based on the results of the re-sensing. In this manner, it is possible to move the pointer around on the operation screen in accordance with the movement of a user's finger.

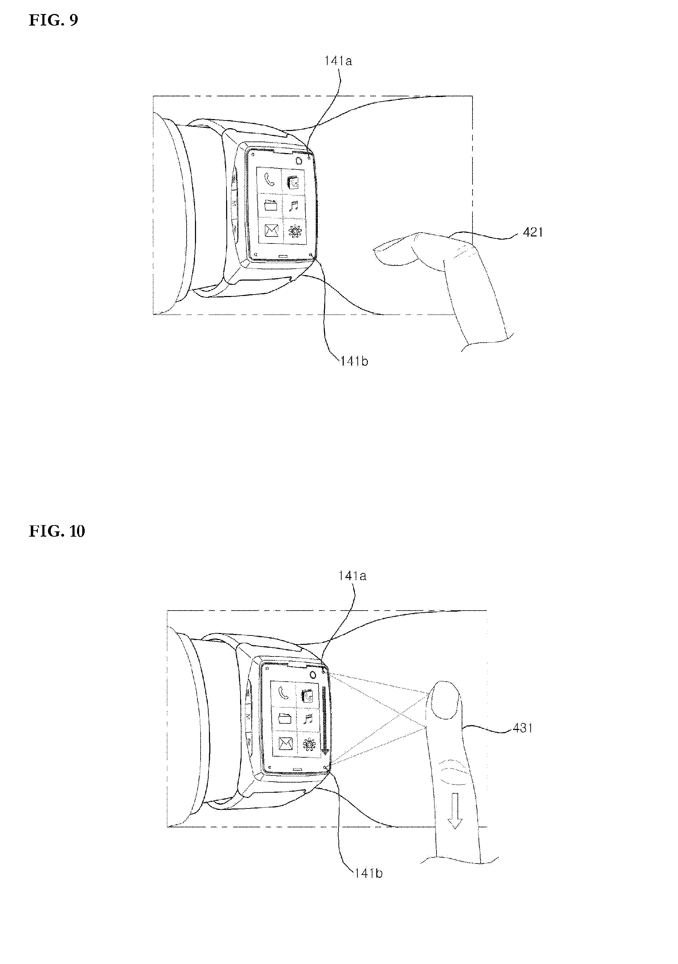

Referring to FIG. 9, if the user taps the back of the left hand with the tip of a finger 421 of the right hand when wearing the electronic device 100 on the wrist of the left hand, the motion sensor 145 may detect the vibration of the back of the hand, and may thus determine that an operation similar to, for example, a mouse click or selection has occurred. As a result, a predefined operation corresponding to an object currently being pointed at by a pointer may be performed. Alternatively, the predefined operation corresponding to the pointed-to object may be performed if the user stops moving the finger 421 for more than a predefined amount of time.

Referring to FIG. 10, rubbing the back of a hand with the flat surface of a finger of the other hand may produce a greater amount of reflection of ultrasonic waves than are produced from rubbing the back of a hand with a fingertip of the other hand. Given this, if the user rubs the back of the left hand with the flat surface of a finger of the right hand when wearing the electronic device 100 on the wrist of the left hand, an object currently being pointed at by a pointer may be dragged.

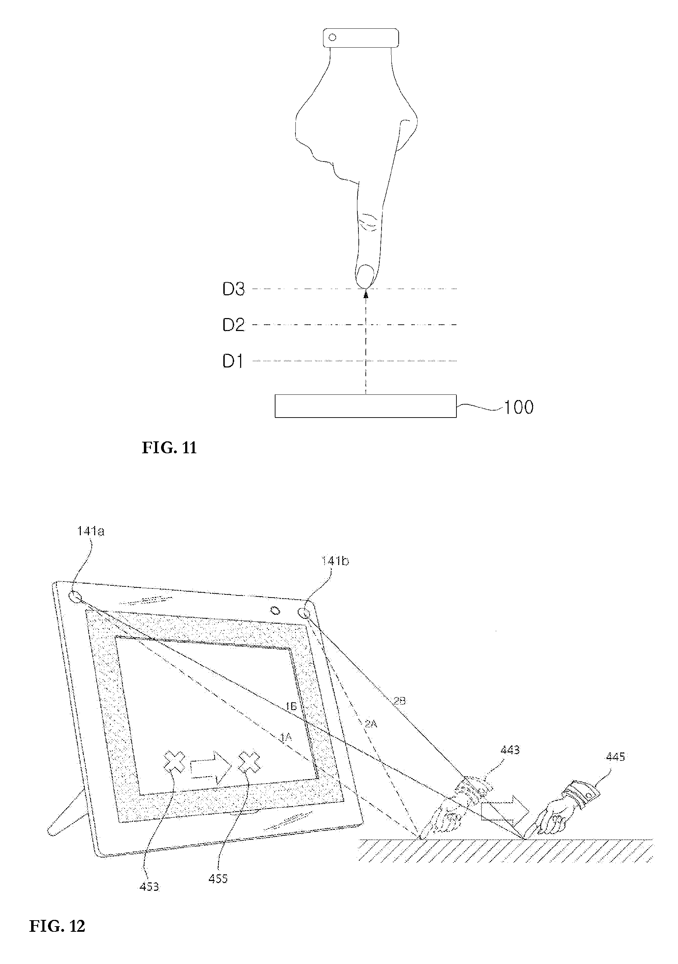

FIG. 11 shows an example of how the electronic device may be controlled three-dimensionally. When the distance between the electronic device 100 and an entity (such as a finger of the user) nearby and approaching the electronic device 100 is between D2 and D3, the approaching entity may be determined to be within a third proximity range of the electronic device 100.

When the distance between the electronic device 100 and the approaching entity is between D1 and D2, the approaching entity may be determined to be within a second proximity range of the electronic device 100. When the distance between the electronic device 100 and the approaching entity is less than D1, the approaching entity may be determined to be within a first proximity range of the electronic device 100. If the approaching entity is about D3 distant or within the third proximity range from the electronic device 100, a pointer and/or operation control menu may be displayed on an operation screen.

If a motion of the approaching entity is detected within the second proximity range of the electronic device 100, the detected motion may be interpreted as corresponding to a drag operation. If the approaching entity is about D1 distant or within the first proximity range from the electronic device 100, an operation corresponding to an object currently being pointed to by the pointer may be executed.

FIGS. 12 through 17 explaining operation of the first through third embodiments, taking a digital photo frame as the electronic device. The digital photo frame which may includes a case, a supporter supporting the case, a display module, and a plurality of detection sensors installed along the edges of the display module and is capable of detecting any approaching entity as previously explained.

FIG. 12 shows how a pointer may be moved in a two-dimensional (2D) manner. If a user puts a finger at a first location 443, the first and second detection sensors 141 a and 141 b may sense their respective distances from the finger. Then, a pointer may be displayed at a first location 453 on the display module 151 based on the results of the sensing.

If the user then moves the finger from the first location 443 to a second location 445, the first and second detection sensors 141 a and 141 b may re-sense their respective distances from the finger. The pointer may then be moved from the first location 443 to a second location 455 on the display module 151 based on the results of the re-sensing. In this manner, it is possible to move the pointer around on a screen of the display module 151 in accordance with the movement of a finger.

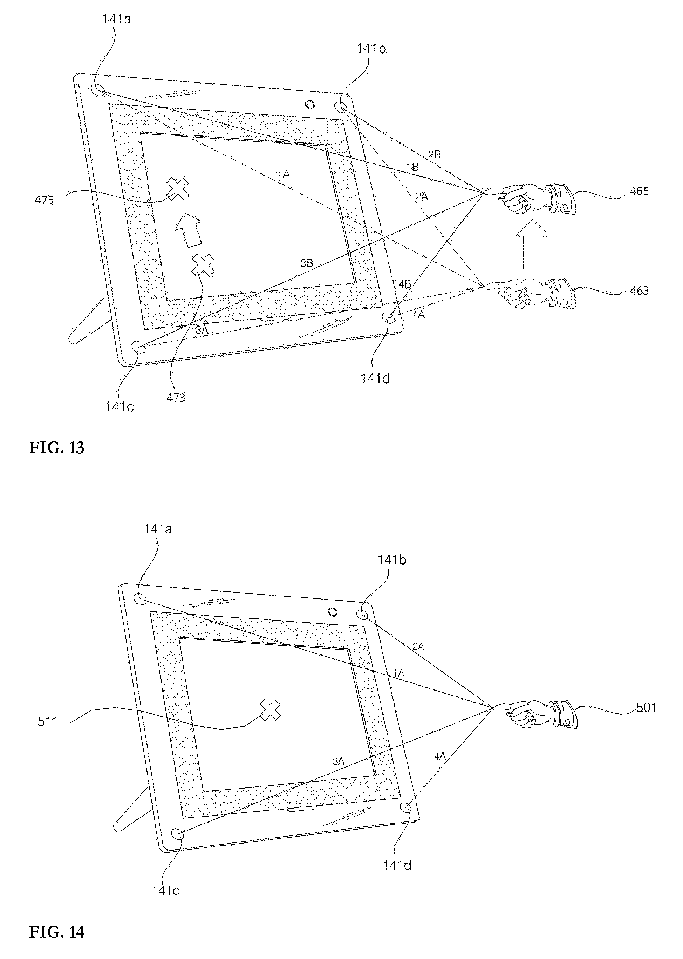

FIG. 13 shows how a pointer may be moved in a three-dimensional (3D) manner. If a user places a finger at a first location 463, the first through fourth detection sensors 141 a through 141 d may sense their respective distances from the finger, e.g., 1 A through 4A. Then, a pointer may be displayed at a first location 473 on the display module 151 based on the results of the sensing.

If the user then moves the finger from the first location 463 to a second location 465, the first through fourth detection sensors 141 a through 141 d may re-sense their respective distances from the finger, e.g., 1 B through 4B. The pointer may then be moved from the first location 473 to a second location 475 on the display module 151 based on the results of the re-sensing.

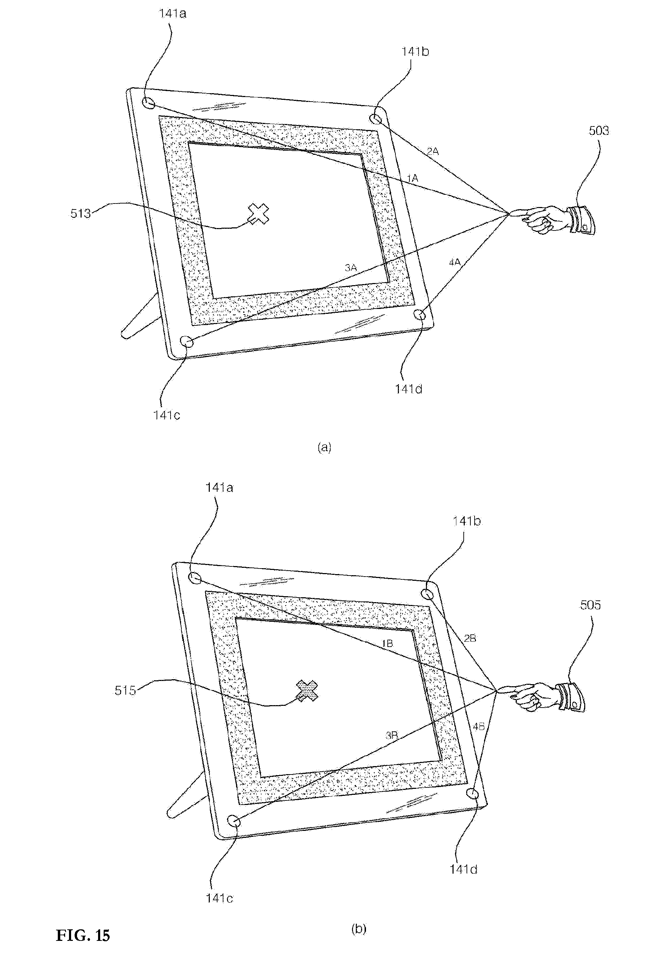

FIGS. 14 and 15 show an item currently being pointed to by a pointer may be executed. If a user places a finger at a first location 501 and stops moving the finger for at least a predetermined amount of time, an operation corresponding to an item currently being pointed at by a pointer 511 may be executed as if clicked by a typical mouse. The predetermined amount of time may be set by the user or preprogrammed.

In accordance with another embodiment, the determination as to whether an operation is to be performed (corresponding, for example, to a click of a mouse) may be based on the level of proximity of, for example, a finger of the user to the display module 151.

Referring to FIG. 15(a), when the user places a finger at a first location 503, the sum of the distances (1 A through 4A) of the first through fourth detection sensors 141 a through 141 d from the finger may be greater than a first threshold. When this occurs, an operation corresponding to a click of a mouse may not be performed.

On the other hand, referring to FIG. 15(b), if the user moves the finger from the first location 503 to a second location 505, the sum of the distances (1 B through 4B) of the first through fourth detection sensors 141 a through 141 d from the finger may become less than the first threshold. When this happens, an operation corresponding to a click of a mouse may be performed.

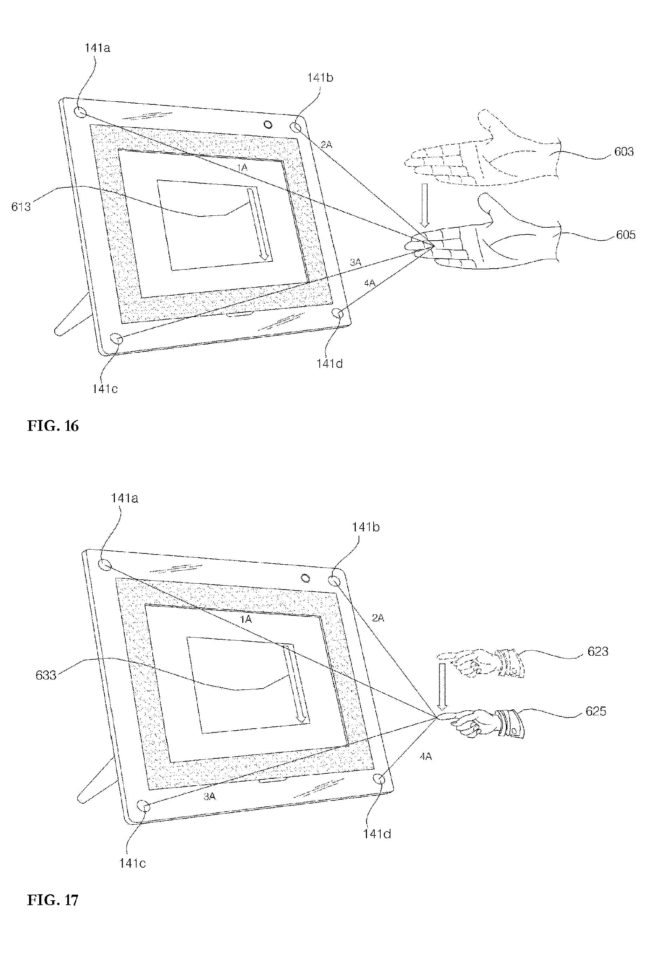

FIG. 16 shows how a drag input may be generated to control electronic device 100. This embodiment is based on the concept that a greater amount of reflection of ultrasonic waves may be produced using a whole hand of a user than when just a fingertip is used. Accordingly, if a motion producing a greater amount of reflection of ultrasonic waves than a predetermined reference level is detected using a user's hand, the detected motion may be interpreted as a drag input 613.

FIG. 17 shows another way a drag input may be generated to control electronic device 100. If the user moves a finger from a first location 623 to a second location 625, it may be determined whether to perform an operation (similar to, for example, a click of a mouse or a drag operation) by comparing a sum of the respective distances of the first through fourth detection sensors 141 a through 141 d from the finger (e.g., 1 A + 2A + 3A + 4A) with a first threshold and a second threshold, which is greater than the first threshold.

If the sum of the distances of the first through fourth detection sensors 141a through 141 d from the finger is less than the first threshold, an operation corresponding to a click of a mouse may be performed. On the other hand, if the sum of the distances of the first through fourth detection sensors 141 a through 141 d from the finger is greater than the first threshold and is less than the second threshold, a drag operation may be performed, as indicated by reference numeral 633.

The foregoing embodiments may be performed by code that can be stored on a computer-readable medium and read by a processor. The computer-readable recording medium may be any type of recording device in which data is stored in a computer-readable manner. Examples of a computer-readable recording medium include a ROM, a RAM, a CD-ROM, a magnetic tape, a floppy disc, an optical data storage, and a carrier wave (e.g., data transmission through the internet).

The computer-readable recording medium can be distributed over a plurality of computer systems connected to a network so that computer-readable code is written thereto and executed therefrom in a decentralized manner. Functional programs, code, and code segments needed for realizing the embodiments can be easily generated by any one of a variety of methods known to those skilled in the art.

One or more embodiments described herein provide an electronic device that is capable of being controlled in a touchless manner using one or more touchless detection sensors.

One or more additional embodiments provide a method for controlling the electronic device as previously described.

According to one embodiment, a method for controlling an electronic device includes displaying an operation screen on a display module; preparing a detection sensor and displaying a pointer on the operation screen if an entity nearby and approaching the electronic device is detected by the detection sensor, the detection sensor being capable of detecting the approaching entity based on ultrasonic waves reflected from the approaching entity; and if a motion of the approaching entity is detected by the detection sensor, moving the pointer in accordance with the detected motion.

According to another embodiment, an electronic device includes a display module configured to be provided in a main body of the electronic device and display an operation screen; a sensing unit configured to include an ultrasonic sensor and detect an entity nearby and approaching the electronic device using the ultrasonic sensor; and a controller configured to display a pointer on the operation screen if the approaching entity is detected by the sensing unit, wherein, if a motion of the approaching entity is detected by the sensing unit, the controller moves the pointer in accordance with the detected motion.

According to another embodiment, a method of controlling an electronic device includes displaying an image on a display module; preparing a detection sensor, and displaying an operation control menu and a pointer on a certain part of the display module if an entity nearby and approaching the electronic device is detected by the detection sensor, the detection sensor being capable of detecting the approaching entity based on ultrasonic waves reflected from the approaching entity; and if a motion of the approaching entity is detected by the detection sensor, moving the pointer in accordance with the detected motion.

According to another embodiment, an electronic device includes a display module configured to display an image; a sensing unit configured to include an ultrasonic sensor and detect an entity nearby and approaching the electronic device using the ultrasonic sensor; and a controller configured to display an operation control menu and a pointer on a certain part of the display module if the approaching entity is detected by the sensing unit, wherein, if a motion of the approaching entity is detected by the detection sensor, the controller moves the pointer in accordance with the detected motion.

According to another embodiment, a method of controlling an electronic device includes displaying an image on a display module; preparing a detection sensor, and displaying an operation control menu and a pointer on a certain part of the display module if an entity nearby and approaching the electronic device is detected from a first distance, the detection sensor being capable of detecting the approaching entity based on ultrasonic waves reflected from the approaching entity; and if a first motion of the approaching entity is detected from a distance between the first distance and a second distance, which is less than the first distance, moving the pointer in accordance with the detected first motion.

According to another embodiment, an electronic device includes a display module configured to display an image; a sensing unit configured to include an ultrasonic sensor and detect an entity nearby and approaching the electronic device using the ultrasonic sensor; and a controller configured to display an operation control menu and a pointer on a certain part of the display module if an entity nearby and approaching the electronic device is detected from a first distance, wherein, if a first motion of the approaching entity is detected from a distance between the first distance and a second distance, which is less than the first distance, the controller moves the pointer in accordance with the detected first motion.

In accordance with one or more of the embodiments described herein, it is possible to display an operation control menu and a pointer, move the pointer and execute any operation desired by a user simply by using a detection sensor (such as an ultrasonic sensor) capable of detecting any approaching entity in a touchless manner. Therefore, it is possible to easily control various operations performed by an electronic device in a touchless manner without the need to touch the screen of the electronic device or manipulate any buttons of the electronic device.

In accordance with another embodiment, a method of controlling an electronic device includes detecting an object at a distance from the electronic device; displaying a symbol at a fixed location on a screen of the electronic device in response to detection of the object by an ultrasonic sensor of the electronic device; and performing an operation corresponding to the symbol based on a state of the object detected after display of the symbol on the screen.

The operation may include moving the symbol on the screen when movement of the object is detected after display of the symbol on the screen, and the symbol may be moved on the screen in a direction of movement of the object. In addition, the symbol may be moved based on detection of two-dimensional movement of the object after display of the symbol on the screen. The two-dimensional movement may occur when the object slides across a surface adjacent the electronic device.

The operation corresponding to the symbol may also be performed when movement of the object generates vibration detected by a sensor on the electronic device.

The operation may also be performed when the object moves from a first position to a second position along a surface adjacent the electronic device, or based on an orientation of the object as the object moves along said surface adjacent the electronic device.

In addition, the symbol may be moved based on detection of three-dimensional movement of the object after display of the symbol on the screen and, for example, when the object moves from a first position to a second position in the air without making contact with any other object.

In addition, the operation may correspond to a function of the electronic device. The function may be performed when the object is detected substantially at a same position for at least a predetermined period of time. The function may also be performed when the object moves from a first detected distance to a second detected distance relative to the electronic device. The second detected distance may be closer to or farther away from the electronic device than the second detected distance.

The state of the object may be detected based on a change in ultrasonic waves detected by one or more sensors on the electronic device and/or based on a vibration generated by the object and detected by one or more sensors on the electronic device. If an amount of ultrasonic waves reflected from the object is greater than a reference level, performing a drag operation in accordance with a detected motion of the object. If a distance between the object and the electronic device is less than a reference level, executing an operation pointed at by the symbol. The object may be a finger or hand of a user or another body part or a stylus or other object.

In one application, the operation corresponding to the symbol is performed based on movement of the finger of the user along an opposing hand. The symbol may include a pointer, cursor, or other graphical object on the display screen of the electronic device. In another application, the operation may correspond to a change in shape of the symbol on the screen of the electronic device.

In accordance with another embodiment, an electronic device includes a display screen; at least one sensor including an ultrasonic sensor to detect an object located a distance from the display screen; and a controller to display a symbol on the screen in response to detection of the object and to perform an operation corresponding to the symbol based on detection of a change in a state of the object by the ultrasonic sensor that occurs after display of the symbol on the screen.

The operation may include moving the symbol on the screen when movement of the object is detected after display of the symbol on the screen. The symbol may be moved on the screen in a direction of movement of the object.

The electronic device may further include a coupler to couple the device to a body part of a user and a wireless transceiver. The object may be a finger, hand, or other body part of the user and the wireless transceiver is coupled to the wrist of the user by the coupler. In another application, the controller may generate a digital image on the screen and wherein the object is a finger, hand, or other body part. The sensors may detect a change in the state of the object based on a change in detected ultrasonic waves or a detected vibration caused by the object.

The term 'electronic device,' as used herein, may indicate but is not limited to a digital photo frame, a mobile phone, a smart phone, a laptop computer, a digital broadcast receiver, a personal digital assistant (PDA), a portable multimedia player (PMP), a television or other display device, or a navigation device. In this disclosure, the terms 'module' and 'unit' can be used interchangeably.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of controlling an electronic device comprising:
detecting an object at a distance from the electronic device;
displaying a symbol at a fixed location on a screen of the electronic device in response to detection of the object by an ultrasonic sensor of the electronic device; and
performing an operation corresponding to the symbol based on a state of the object detected after display of the symbol on the screen.

2. The method of claim 1, wherein said operation includes moving the symbol on the screen when movement of the object is detected after display of the symbol on the screen.

3. The method of claim 2, wherein the symbol is moved on the screen in a direction of movement of the object.

4. The method of claim 2, wherein the symbol is moved based on detection of two-dimensional or three-dimensional movement of the object after display of the symbol on the screen.

5. The method of claim 1, wherein said operation corresponding to the symbol is performed when movement of the object generates a vibration detected by a sensor on the electronic device.

6. The method of claim 1, wherein said operation is performed when the object moves from a first position to a second position along a surface adjacent the electronic device.

7. The method of claim 1, wherein the state of the object is detected based on a change in ultrasonic waves detected by one or more sensors on the electronic device.

8. The method of claim 1, wherein the state of the object is detected based on a vibration generated by the object and detected by one or more sensors on the electronic device.

9. The method of claim 1, wherein the object includes a finger of a user.

10. The method of claim 1, wherein the symbol includes a pointer.

11. The method of claim 1, further comprising:
if an amount of ultrasonic waves reflected from the object is greater than a reference level, performing a drag operation in accordance with a detected motion of the object; and
if a distance between the object and the electronic device is less than a reference level, executing an operation pointed at by the symbol.

12. An electronic device comprising:
a display screen;
at least one sensor including an ultrasonic sensor to detect an object located a distance from the display screen; and
a controller to display a symbol on the screen in response to detection of the object and to perform an operation corresponding to the symbol based on detection of a change in a state of the object by the ultrasonic sensor that occurs after display of the symbol on the screen.

13. The device of claim 12, wherein said operation includes moving the symbol on the screen when movement of the object is detected after display of the symbol on the screen.

14. The device of claim 12, further comprising:
a coupler to couple the device to a body part of a user.
a wireless transceiver, wherein:
the object is a finger of the user, and
the wireless transceiver is coupled to the wrist of the user by the coupler.

15. The device of claim 12, wherein said one or more sensors detect a change in the state of the object based on a change in detected ultrasonic waves or a detected vibration caused by the object.
